(19) Europäisches Patentamt / European Patent Office / Office européen des brevets

(11) **EP 2 289 145 B1**

(12) **EUROPÄISCHE PATENTSCHRIFT**

(45) Veröffentlichungstag und Bekanntmachung des Hinweises auf die Patenterteilung:
**26.12.2018 Patentblatt 2018/52**

(21) Anmeldenummer: **08773688.0**

(22) Anmeldetag: **17.06.2008**

(51) Int Cl.:
$H02J\ 3/36\ ^{(2006.01)}$      $H02M\ 5/458\ ^{(2006.01)}$

(86) Internationale Anmeldenummer:
**PCT/EP2008/005211**

(87) Internationale Veröffentlichungsnummer:
**WO 2009/152840 (23.12.2009 Gazette 2009/52)**

(54) **REGELVERFAHREN FÜR EINE HOCHSPANNUNGSGLEICHSTROMÜBERTRAGUNGSANLAGE MIT GLEICHSPANNUNGSZWISCHENKREIS UND SELBSTGEFÜHRTEN UMRICHTERN**

REGULATION METHOD FOR A HIGH VOLTAGE DC TRANSMISSION PLANT WITH DC LINK AND SELF-COMMUTATED INVERTERS

PROCÉDÉ DE RÉGLAGE POUR UNE INSTALLATION DE TRANSMISSION DE COURANT CONTINU HAUTE TENSION PRÉSENTANT UN CIRCUIT INTERMÉDIAIRE À COURANT CONTINU ET DES CONVERTISSEURS AUTOMATIQUES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**02.03.2011 Patentblatt 2011/09**

(73) Patentinhaber: **Siemens Aktiengesellschaft 80333 München (DE)**

(72) Erfinder:
- **BERNHARD, Tobias 96114 Hirschaid (DE)**
- **DOMMASCHK, Mike 01945 Guteborn (DE)**
- **DORN, Jörg 96155 Buttenheim (DE)**
- **EULER, Ingo 91056 Erlangen (DE)**
- **KARLECIK-MAIER, Franz 91315 Höchstadt (DE)**
- **LANG, Jörg 95346 Stadtsteinach (DE)**
- **STRAUSS, John-William 91341 Röttenbach (DE)**
- **TU, Quoc-Buu 90574 Rosstal (DE)**
- **WITTSTOCK, Carsten 90480 Nürnberg (DE)**
- **WÜRFLINGER, Klaus 90419 Nürnberg (DE)**
- **RITTIGER, Jürgen 91074 Herzogenaurach (DE)**
- **VENJAKOB, Oliver 91058 Erlangen (DE)**

(56) Entgegenhaltungen:
**WO-A-2007/033619      DE-C1- 19 544 777**

- **KARLECIK-MAIER F: "A New Closed Loop Control Method for HVDC Transmission" 1. Oktober 1996 (1996-10-01), IEEE TRANSACTIONS ON POWER DELIVERY, IEEE SERVICE CENTER, NEW YORK, NY, US, PAGE(S) 1955 - 1960 , XP011049237 ISSN: 0885-8977 das ganze Dokument**

**Beschreibung**

Die Erfindung betrifft ein Verfahren zum Regeln von wenigstens zwei Umrichtern, die als Gleichrichter oder Wechselrichter regelbar und über eine Gleichspannungsverbindung miteinander verbunden sind, im Bereich der Energieübertragung und/oder -verteilung, bei dem an jedem Umrichter jeweils eine Messgleichspannung (Udc_r1...Udc_rr; Udc_i1...Udc_ii) und jeweils ein Messgleichstrom (Idc_r1...Idc_rr; Idc_i1...Idc_ii) gemessen werden und an eine Gleichrichterregelung zur Regelung des jeweiligen Gleichrichters oder an eine Wechselrichterregelung zur Regelung des jeweils zugeordneten Wechselrichters übertragen werden, wobei jede Gleichrichterregelung und jede Wechselrichterregelung jeweils die Differenz zwischen einer vorgegebenen Sollgleichspannung (Udco) und der jeweils empfangenen Messgleichspannung (Udc_r1...Udc_rr, Udc_i1...Udc_ii) unter Gewinnung einer Differenzgleichspannung (du) und ferner die Differenz zwischen einem Sollgleichstrom (Idco_r1... Idco_rr, Idco_i1...Idco_ii) und dem jeweils empfangenen Messgleichstrom (Idc_r1...Idc_rr, Idc_i1...Idc_ii) unter Gewinnung eines Differenzgleichstromes (di) bilden, wobei der Messgleichstrom, die Messgleichspannung, der Sollgleichstrom und die Sollgleichspannung normiert vorliegen,

Ein solches Verfahren ist aus der WO 2007/033620 A1 bereits bekannt. Dort ist ein Regelungsverfahren für die Hochspannungsgleichstromübertragung beschrieben, bei der elektrische Leistung zwischen Wechselspannungsnetzen über einen Gleichstromkreis übertragen wird. Die zur Leistungsübertragung eingesetzte Hochspannungsgleichstromübertragungs(HGÜ)-anlage besteht aus einem Gleichrichter und aus einem Wechselrichter, die über eine Gleichstromverbindung miteinander verbunden sind. Zur Kopplung der Umrichter mit dem jeweils zugeordneten Wechselspannungsnetz sind Transformatoren vorgesehen. Bei der Regelung des Gleich- oder Wechselrichters werden sowohl am Gleichrichter als auch am Wechselrichter jeweils eine Messgleichspannung Udc_r beziehungsweise Udc_i und jeweils ein Messgleichstrom Idc_r beziehungsweise Idc_i erfasst und an die jeweilige Regelung übertragen. Aus der vorgegebenen Leistung, die übertragen werden soll, werden mit Hilfe eines Funktionsgebers eine Sollgleichspannung Udco sowie ein Sollgleichstrom Idco ermittelt. Anschließend wird die Differenzgleichspannung du aus der Differenz zwischen Sollgleichspannung Udco und der Messgleichspannung Udc_r, Udc_i berechnet. Entsprechend wird der Differenzgleichstrom di aus der Differenz des Sollgleichstromes Idco und dem jeweils ermittelten Messgleichstrom Idc_r und Idc_i gebildet. Sämtliche Werte liegen hierbei normiert vor, wobei beispielsweise auf eine Nenngleichspannung und einen Nenngleichstrom oder aber auf Sollgleichstrom und die Sollgleichspannung normiert wird. Die Gleichrichterregelung regelt den Gleichrichter nun auf eine Weise, dass die Summe der Differenzgleichspannung du und des Differenzgleichstroms di minimal wird. Die Wechselrichterregelung regelt den Wechselrichter hingegen so, dass die Differenz zwischen Differenzgleichstrom di und der Differenzgleichspannung du minimal wird. In DE 195 44 777 C1 ist ein ähnliches Verfahren offenbart. Das vorbekannte Verfahren eignet sich jedoch nur für so genannte fremdgeführte Umrichter, bei denen beispielsweise Thyristoren, die nicht mittels Zündsignale abgeschaltet werden können, zum Einsatz gelangen. Solche Umrichter erlauben einen Stromfluss im Gleichstromkreis in nur eine Richtung. Eine Umkehrung des Leistungsflusses kann nur durch eine Umpolung der an dem jeweiligen Umrichter abfallenden Spannung erfolgen. Darüber hinaus muss der Betriebsstrom bei dieser im Folgenden klassischen HGÜ genannten Anlage aufgrund der erforderlichen Lückenstromvermeidung der Stromsollwert immer größer als 0,05 p.u. sein. Dies erlaubt die oben genannte Normierung auf die Sollwerte.

Aufgrund der fortschreitenden Verbesserung im Bereich der Leistungselektronik ist es möglich geworden, auch abschaltbare Leistungshalbleiter, wie beispielsweise IGBTs oder GTOs, für Umrichter im Bereich der Energieübertragung und insbesondere bei der HGÜ einzusetzen. Ein solcher auch Voltage Source Converters (VSC) genannter Umrichter ist über einen Gleichspannungszwischenkreis mit einem weiteren VSC verbunden. Jedem abschaltbaren Leistungshalbleiter des Umrichters ist eine Freilaufdiode parallel geschaltet. Die Umkehrung des Leistungsflusses erfolgt nicht mehr durch eine Umpolung an dem jeweiligen VSC abfallenden Spannung, sondern durch eine Umkehrung des über den jeweiligen VSC fließenden Stromes. Darüber hinaus sind am jeweiligen VSC Gleichstromsollwerte gleich null verwendbar. Eine Anwendung des gattungsgemäßen Verfahrens zur Steuerung von VSC einer HGÜ-Anlage ist somit nicht möglich.

Aus der WO 2007/0336619 A1 ist ein Regelungsverfahren für eine Gleichstromübertragung mit mehreren Stromrichtern bekannt, bei der das oben genannte Verfahren ebenfalls zum Einsatz gelangt. Auch hier sind, insbesondere am Gleichrichter, Sollströme von über 0,05 p.u. zur Vermeidung von Lückenströmen erforderlich.

Aufgabe der Erfindung ist es, ein Verfahren der eingangs genannten Art bereitzustellen, mit dem eine Regelung von Umrichtern, die abschaltbare Leistungshalbleiter aufweisen und über einen Gleichspannungszwischenkreis miteinander verbunden sind, durchgeführt werden kann, wobei gleichzeitig die Vorgabe von Sollströmen gleich Null ermöglicht ist.

Die Erfindung löst diese Aufgabe dadurch, dass jeder Umrichter ein selbstgeführter Umrichter (1) mit abschaltbaren Leistungshalbleitern ist und die Gleichrichterregelung den jeweils zugeordneten Umrichter so regelt, dass die Summe aus dem Produkt der Differenzgleichspannung (du) und dem Betrag des am jeweils zugeordneten Gleichrichter vorgesehenen Sollgleichstrom (|Idco_r|) und dem Differenzgleichstrom (di) minimal wird (du*|Idco_r|+di→Min) und die Wechselrichterregelung den jeweils zugeordneten Umrichter so regelt, dass die Summe zwischen der Differenzgleichspannung (du) und dem Differenzgleichstrom (di) minimal wird (du+di→Min).

Die Erfindung überträgt das aus der klassischen HGÜ bekannte Regelungsverfahren auf HGÜ-Anlagen, bei denen VSCs und Gleichspannungszwischenkreis zum Einsatz gelangen. Aufgrund des Gleichspannungszwischenkreises kann bei diesen so genannten Voltage Source Convertern (VSC) keine Umpolung der Spannung mehr erfolgen, wodurch bei der klassischen HGÜ eine Umkehr des Leistungsflusses bewirkt wird. Die Umkehrung des Leistungsflusses erfolgt bei solchen Umrichtern (VSCs) durch eine Umkehrung des Stromflusses. Diese physikalischen Unterschiede sind bei dem erfindungsgemäßen Regelungsverfahren berücksichtigt. Das erfindungsgemäße Verfahren erlaubt darüber hinaus auch die Vorgabe von Sollströmen im Wert von null. Dies war bei den bekannten Regelungsverfahren zur klassischen HGÜ unmöglich. Das erfindungsgemäße Verfahren stellt somit eine einfache und flexible Regelung von zwei oder mehreren VSCs bereit, die über eine Gleichspannungsverbindung miteinander verbunden sind.

Die Gleichspannungsverbindung weist eine Polarität auf, die sich während des Betriebs der HGÜ-Anlage im Rahmen der Erfindung auch bei einer Umkehrung des Leistungsflusses nicht ändert. Dabei ist die Gleichspannungsverbindung beispielsweise eine bipolare Gleichspannungsverbindung, die sich zwischen zwei Umrichtern erstreckt. Gemäß dieser Variante besteht die zu regelnde HGÜ-Anlage aus einem Gleichrichter, der über eine Induktivität, beispielsweise einem Transformator mit einem Energie bereitstellenden Wechselspannungsspannungsnetz verbunden ist. Der Wechselrichter, der über die bipolare Gleichspannungsverbindung mit dem besagten Gleichrichter verbunden ist, ist ebenfalls über eine Induktivität, wie beispielsweise einem Transformator, mit einem zweiten Wechselspannungsnetz verbunden, das beispielsweise die zu versorgenden Lasten aufweist. Abweichend hiervon sind jedoch auch mehrere Umrichter gemäß dem erfindungsgemäßen Verfahren regelbar, wobei die Umrichter oder in diesem Fall die VSCs über eine Gleichspannungsverbindung mit beliebiger Topologie miteinander verbunden sind. Das erfindungsgemäße Verfahren ist von der Topologie der Gleichspannungsverbindung völlig unabhängig.

Zweckmäßigerweise sind die Sollgleichspannung Udco jeder Gleichrichterregelung und die Sollgleichspannung Udco jeder Wechselrichterregelung identisch. Eine aufwändige Definition der Sollgleichspannung an jeder Umrichterstation mit einer schnellen und sicheren Telekommunikation zur Mitteilung der jeweiligen Sollgleichspannung an andere Stationen ist somit im Rahmen der Erfindung überflüssig geworden.

Zweckmäßigerweise stehen die Umrichter wenigstens 1 Kilometer entfernt voneinander. Von dieser zweckmäßigen Weiterentwicklung sind alle HGÜ-Anlagen der so genannten Back-to-Back-Konfiguration, bei der Wechselrichter und Umrichter räumlich nebeneinander aufgestellt sind und lediglich zur regelbaren Kopplung unterschiedlicher Wechselspannungsnetze dienen, ausgeschlossen. Die Vorrichtung für welche das Verfahren gemäß dieser vorteilhaften Weiterentwicklung ausgestaltet ist, dient somit zur Übertragung von elektrischer Energie über eine größere Entfernung hinweg.

Vorteilhafterweise werden jede Messgleichspannung Udc_rr oder Udc_ii und die Sollgleichspannung Udco auf die Sollgleichspannung Udco normiert. Dies ermöglicht insbesondere bei kleinen zu übertragenden Leistungen eine stabile Regelung. Diese bereits aus der klassischen HGÜ bekannte Normierung erfolgt jedoch im Rahmen des Ausführungsbeispiels der Erfindung nur im Zusammenhang mit der jeweiligen Mess- und Sollgleichspannung. Eine Normierung auf den Sollgleichstrom unterbleibt hingegen, um auch bei dieser zweckmäßigen Weiterentwicklung der Erfindung die Verwendung von Sollgleichströmen gleich null zu ermöglichen.

Vorteilhafterweise sind zwei Umrichter vorgesehen, von denen einer als Gleichrichter und der andere als Wechselrichter betrieben wird, wobei sich zwischen dem Gleichrichter und dem Wechselrichter ein Gleichspannungszwischenkreis erstreckt. Gemäß dieser Ausgestaltung wird das Verfahren eingesetzt für eine HGÜ-Anlage mit VSCs und einem unverzweigten Gleichspannungszwischenkreis. Der Gleichspannungszwischenkreis ist beispielsweise einpolig ausgestaltet, wobei die Erde als Rückleiter genutzt wird. Abweichend davon ist die Gleichspannungsverbindung zweipolig, wobei Pluspol und Minuspol der Gleichspannungsverbindung in Form von Kabelleitern realisiert sind.

Gemäß einer hiervon abweichenden Ausgestaltung ist das erfindungsgemäß Verfahren für wenigstens drei Umrichter vorgesehen, zwischen denen sich ein Gleichspannungsnetz erstreckt.

Das Gleichspannungsnetz kann eine beliebige Topologie aufweisen.

Gemäß einer diesbezüglich zweckmäßigen Weiterentwicklung wird für jede Gleichrichterregelung und für jede Wechselrichterregelung jeweils eine zugeordnete Gleichrichtersollgleichleistung (Pdco_r1...Pdco_rr) beziehungsweise Wechselrichtersollgleichleistung (Pdco_i1...Pdco_ii) festgelegt, wobei die Summe aus allen Gleichrichtersollgleichleistungen und allen Wechselrichtersollgleichleistungen gleich null ist. Die jeweiligen Sollgleichleistungen werden beispielsweise von einer zentralen Leitstelle festgelegt und von dort an die jeweiligen Umrichterregelungen übertragen. Zur Übertragung ist keineswegs eine leistungsfähige Kommunikationsverbindung notwendig, wie dies beispielsweise bei der klassischen HGÜ der Fall ist. Im Rahmen der Erfindung ist es ausreichend, die jeweiligen Sollgleichleistungen über das Internet oder jede andere einfache und somit kostengünstige Telekommunikation an die jeweilige Regelung zu übertragen.

Zweckmäßigerweise wird an jedem Umrichter aus der diesem zugeordneten Sollgleichleistung und der allgemeinen Sollgleichspannung der jeweils dem Umrichter zugeordnete Sollgleichstrom bestimmt. Gemäß dieser vorteilhaften Weiterentwicklung wird das erfindungsgemäße Verfahren einfach und übersichtlich gestaltet.

Zweckmäßigerweise erfolgt die Regelung jedes Gleichrichters und jedes Wechselrichters über den gesamten Arbeitsbereich des Gleichrichters beziehungsweise des Wechselrichters hinweg sowohl auf der Grundlage des jeweils zugeordneten Gleichrichterdifferenzgleichstromes (di_r1...di_rr) als auch auf der Grundlage der Gleichrichterdifferenzgleichspannung (du_r1...du_rr) beziehungsweise auf der Grundlage des jeweils zugeordneten Wechselrichterdifferenzgleichstromes (di_r1...di_rr) als auch auf der Grundlage der zugeordneten Wechselrichterdifferenzgleichspannung (du_i1...du_ii) erfolgt.

Vorteilhafterweise werden an jedem Umrichter jeweils eine Messgleichspannung (Udc_r1...Udc_rr; Udc_i1...Udc_ii) und jeweils ein Messgleichstrom (Idc_r1...Idc_rr; Idc_i1...Idc_ii) gemessen und einer Gleichrichterregelung oder einer Wechselrichterregelung übertragen.

Gemäß einer diesbezüglich zweckmäßigen Weiterentwicklung wird eine Anzahl von Umrichtern so geregelt, dass ein durch einen in der Gleichspannungsverbindung angeordneten Trennschalter fließender Gleichstrom zu null wird. Gemäß dieser vorteilhaften Weiterentwicklung können einfache Trennschalter in der Gleichspannungsverbindung eingesetzt werden, da ein Schalten immer stromlos erfolgen kann. Aufwändige Schwingkreise, die dem Strom durch den Schalter einen Nulldurchgang aufprägen, so dass ein beim Schalten gezogener Lichtbogen erlischt, ist im Rahmen dieser vorteilhaften Ausgestaltung der Erfindung ebenfalls überflüssig geworden.

Gemäß einer diesbezüglichen Abwandlung wird wenigstens ein Umrichter den jeweils an ihn erfassten Messgleichstrom zu null regeln, und anschließend wenigstens ein in der Gleichspannungsverbindung angeordneter Trennschalter geöffnet. Die Nullstromregelung erfolgt mit Hilfe der Verwendung eines Sollgleichstromes gleich Null. Gemäß einer bevorzugten Ausgestaltung dieser Weiterentwicklung werden sämtliche Umrichter, die mit einer Gleichspannungsverbindung miteinander verbunden sind, zu null geregelt. Mit anderen Worten wird an jeder Regelung ein Sollgleichstrom von null verwendet.

Gemäß einer diesbezüglich zweckmäßigen Weiterentwicklung wird ein Ausschaltzeitpunkt gesetzt und an die jeweils betroffene Regelungseinheit übertragen, wobei die besagte Regelungseinheit beim Erreichen des Ausschaltzeitpunktes den ihr zugeordneten Messgleichstrom zu null regelt. Gemäß dieser zweckmäßigen Weiterentwicklung verfügen alle Regelungseinheiten über einen Zeitsignalgeber, beispielsweise eine genaue Uhr, die für alle Regelungen ein gemeinsames oder im Wesentlichen gemeinsames Zeitsignal bereitstellt. Dieses Zeitsignal wird mit dem gesetzten und übertragenen Ausschaltzeitpunkt verglichen. Unterschreitet die Differenz zwischen Ausschaltzeitpunktes und gemessener Zeit einen vorab eingestellten Schwellenwert, also bei Erreichen des Ausschaltzeitpunktes, wird der jeweilige Regelungseinheit ein Sollgleichstrom von Null vorgegeben, so dass der Messgleichstrom zu null geregelt wird. Gemäß dieser Ausgestaltung ist sichergestellt, dass alle betroffenen Regelungen, die beispielsweise von einer Zentralstelle als solche ausgewählt werden oder alle Regelungen zeitgleich in die Nullstromregelung überführt werden.

Gemäß einer diesbezüglich zweckmäßigen Weiterentwicklung wird der Messgleichstrom durch jeden betroffenen Umrichter über eine Nullstromzeitdauer hinweg zu null geregelt, wobei das übliche Regelverfahren anschließend wieder, also nach Ablauf der Nullstromzeitdauer, in Gang gesetzt wird. Innerhalb der Nullstromzeitdauer, die beispielsweise im Bereich von einigen Millisekunden liegt, erfolgt nun das Öffnen des oder der gewünschten Trennschalter in der Gleichspannungsverbindung. Auf diese Art und Weise ist es auf einfache Art und Weise möglich, gezielt einen Bereich oder einen Umrichter aus dem Gleichspannungsnetz mit beliebiger Topologie herauszuschalten, ohne die Leistungsübertragung über die nicht abgeschalteten Verbindungen oder Umrichter ebenfalls zu unterbrechen. Vielmehr ist es im Rahmen der Erfindung möglich, durch schnelles Herunterregeln des Gleichspannungsstromes einen Abschnitt der Gleichspannungsverbindung oder einen Umrichter gezielt aus dem Gleichspannungsnetz herauszuschalten. Anschließend wird die übliche Regelung der HGÜ-Anlage wieder in Gang gesetzt. Das erfindungsgemäße Regelungsverfahren fährt selbsttätig und ohne Kenntnis der neuen Topologie der Gleichspannungsverbindung die hierzu erforderlichen Betriebspunkte der Regelung an. Aufwändige Datenübertragungen, Rechnungen oder dergleichen sind im Rahmen der Erfindung überflüssig geworden.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei

Figur 1      eine HGÜ-Anlage mit mehreren Voltage Source Convertern verdeutlicht, die über ein Gleichspannungsnetz miteinander verbunden sind,

Figur 2      von einem Ausführungsbeispiel des erfindungsgemäßen Regelungsverfahrens verwendeten Parameter und Regelgrößen verdeutlicht,

Figur 3    ein Ausführungsbeispiel des erfindungsgemäßen Verfahrens für mehrere VSCs verdeutlicht, die über einen Gleichspannungsnetz miteinander verbunden sind, verdeutlicht und

Figur 4    ein Ausführungsbeispiel des erfindungsgemäßen Verfahrens verdeutlicht, bei dem ein bestimmter Abschnitt der Gleichspannungsverbindung mittels eines einfachen Trennschalters aus dem Gleichspannungsnetz herausgeschaltet wird.

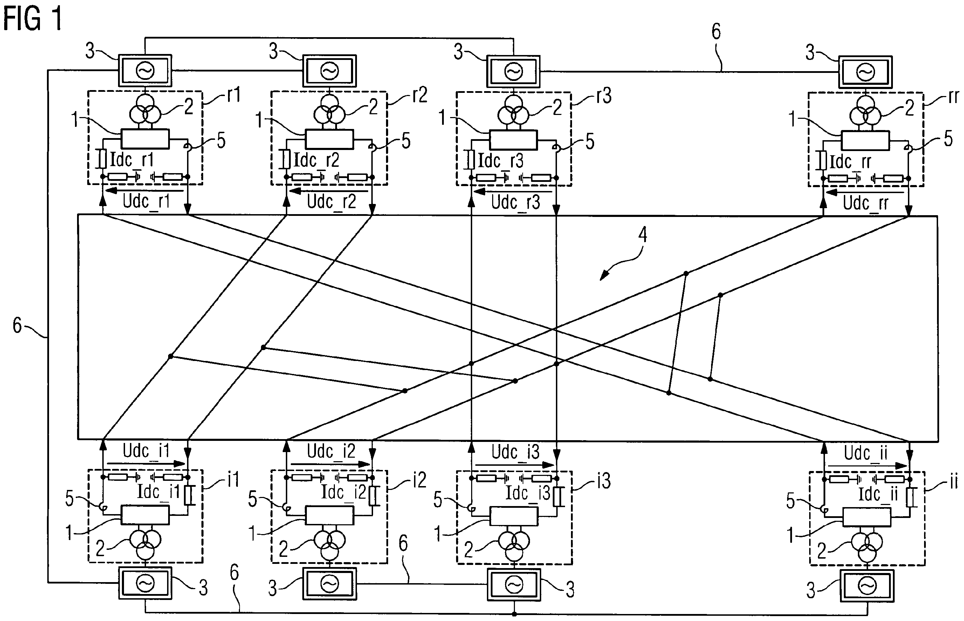

Figur 1 zeigt schematisch eine HGÜ-Anlage mit einer Vielzahl von Umrichtern 1, die jeweils über einen Transformator 2 mit einem Wechselspannungsnetz 3 verbunden sind. Jeder Umrichter 1 ist ein so genannter Voltage Source Converter (VSC), mit abschaltbaren Leistungshalbleitern, wie IGBTs oder GTOs, denen jeweils eine Freilaufdiode antiparallel geschaltet ist. Dabei ist jeder Umrichter 1 mit einem Gleichspannungsnetz 4 als Gleichspannungsverbindung verbunden, das eine beliebige Topologie aufweisen kann. Darüber hinaus ist jedem VSC 1 eine Glättungsdrossel 5 zugeordnet. Ein VSC 1, ein Transformator 2, eine Glättungsdrossel 5 sind Teil einer Gleichrichterstation oder einer Wechselrichterstation, je nachdem, wie der jeweilige VSC durch die figürlich nicht dargstellte Regelungseinheit oder Regelung gesteuert wird. In Figur 1 sind diejenigen Gleichrichterstationen, die als Gleichrichter betriebene VSCs aufweisen, mit r1, r2, r3 ...rr bezeichnet, wobei die Wechselrichterstationen mit VSCs, die als Wechselrichter betrieben werden, mit i1, i2, i3 ...ii bezeichnet sind. In Figur 1 ist weiterhin erkennbar, dass jede Gleichrichterstation rr und jede Wechselrichterstation ii über Sensoren zum Erfassen der an dieser Station abfallenden Messgleichspannung Udc_rr sowie des über den VSC 1 fließenden Gleichstroms Idc_rr beziehungsweise Idc_ii verfügt. Wie ebenfalls aus Figur 1 ersichtlich ist, sind die jeweiligen Wechselspannungsnetze 3 auch über Wechselspannungsverbindungen 6 miteinander verbunden. Die Wechselstromverbindung 6 beeinträchtigt nicht das erfindungsgemäße Verfahren zur Regelung der VSC.

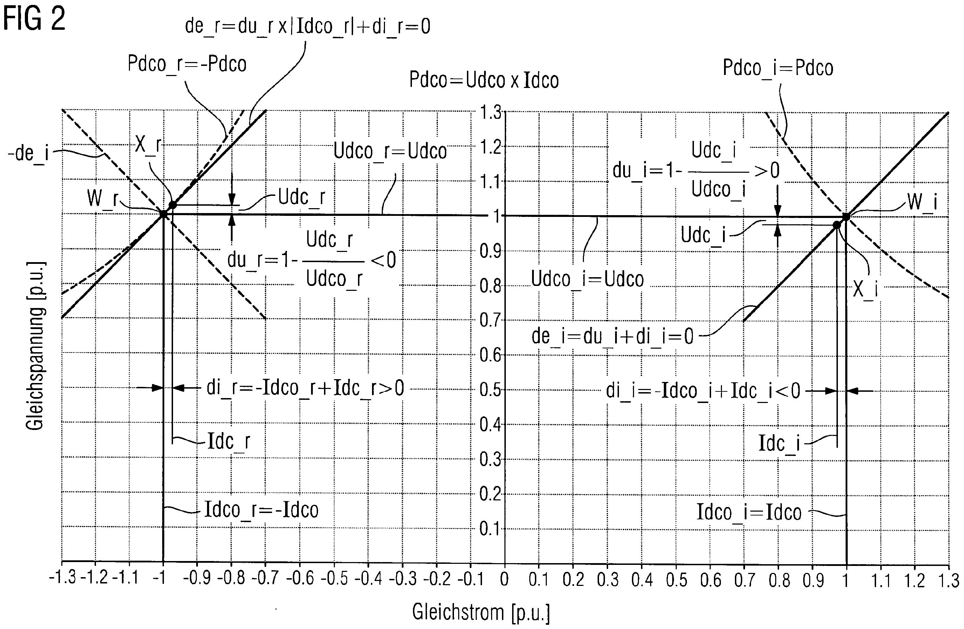

Figur 2 verdeutlicht ein Diagramm, bei dem der normierte Gleichstrom auf der Abszisse und die normierte Gleichspannung auf der Ordinate dargestellt sind. Hierbei wird davon ausgegangen, dass im Gegensatz zu der Darstellung von Figur 1 lediglich ein Gleichrichter über einen Gleichspannungszwischenkreis mit einem als Wechselrichter arbeitenden VSC verbunden ist.

In dem Diagramm sind die Parameter und Regelgrößen des Gleichrichters im linken Quadranten des Diagramms und entsprechende Größen des Wechselrichters im rechten Quadranten dargestellt. Auf der Gleichrichterseite, dessen Mess- und Sollwerte mit einem -r gekennzeichnet sind, sind der Messgleichstrom und die Messgleichspannung im Messpunkt X_r abgetragen. Die Messgleichspannung Udc_r ist somit größer als die Sollgleichspannung Udco bzw. Udco_r. Bildet man die Differenzgleichspannung du_r und normiert auf die Sollgleichspannung Udco ergibt sich

$$du\_r = 1 - \frac{Udc\_r}{Udco\_r} \ .$$ Dieser Wert muss zum Übertragen von Leistung und zum Wechselrichter kleiner als Null sein.

Der Sollgleichstrom Idco_r des Gleichrichters ist definitionsgemäß negativ, so dass sich Idco_r=-Idco ergibt. Der Differenzgleichstrom di, der aus der Differenz zwischen Soll- und Messgleichstrom gebildet wird ergibt sich dann aus di_r=-Idco_r+Idc_r. Eine Normierung auf den Sollgleichstrom Idco_r unterbleibt, um einen Sollgleichstrom von Null bei der Regelung zu ermöglichen. Die Regelung erfolgt nun so, dass die Gleichrichterregelabweichung de_r=du_r*|Idco_r|+di_r minimal, also Null wird. Damit ergibt sich die links dargestellte Gerade als Tangente an die gestrichelt gezeichnete Hyperbel, welche die invariante Sollgleichleistung Pdco_r=-Pdco darstellt. Dadurch, dass bei der Berechnung der Regelabweichung de_r die Differenzgleichspannung du_r mit dem Betrag des Sollgleichstromes |Idco_r| multipliziert wird, ist ein stabiles und schnell einsetzendes Regelverhalten des Gleichrichters bereitgestellt, da die Spannungsregelung bei kleinen Sollgleichströmen unterdrückt wird. Erst bei höheren Sollgleichströmen Idco_r treten Spannungsregelung und Stromregelung im Wesentlichen gleichwertig nebeneinander.

Auf der Wechselrichterseite sind Messgleichstrom Idc_i und Messgleichspannung Udc_i im Betriebspunkt X_i abgetragen. Wie auf der Gleichrichterseite werden Differenzgleichspannung du_i und Differenzgleichstrom di_i berechnet, wobei die Differenzspannung du_i wieder auf die Sollgleichspannung Udco normiert ist. Bei der gewünschten Leistungsübertragung muss gelten, dass du_i größer als Null ist. Eine Normierung zur Bildung des Differenzgleichstromes di_i auf den Sollgleichstrom findet auch hier nicht statt. Somit können auch Sollgleichströme Idco_i gleich 0 vorgegeben werden. Der Differenzgleichstrom di_i ist für die gewünschte Leistungsübertragung kleiner als Null. Die Regelabweichung de_i wird aus der Summe der Differenzgleichspannung du_i und des Differenzgleichstromes di_i gebildet. Die Regelung versucht nun die Regelabweichung de_i zu Null zu minimieren. In dem in Figur 2 gezeigten Diagramm ergibt sich auf diese Weise eine Gerade, die im Punkt W_i die Hyperbel der invarianten Gleichspannungsleistung Pdco_i schneidet. Die Gerade de_i erinnert an das Verhalten eines Ohmschen Widerstandes, so dass die Wechselrichterregelung auch als Widerstandsregelung bezeichnet werden kann.

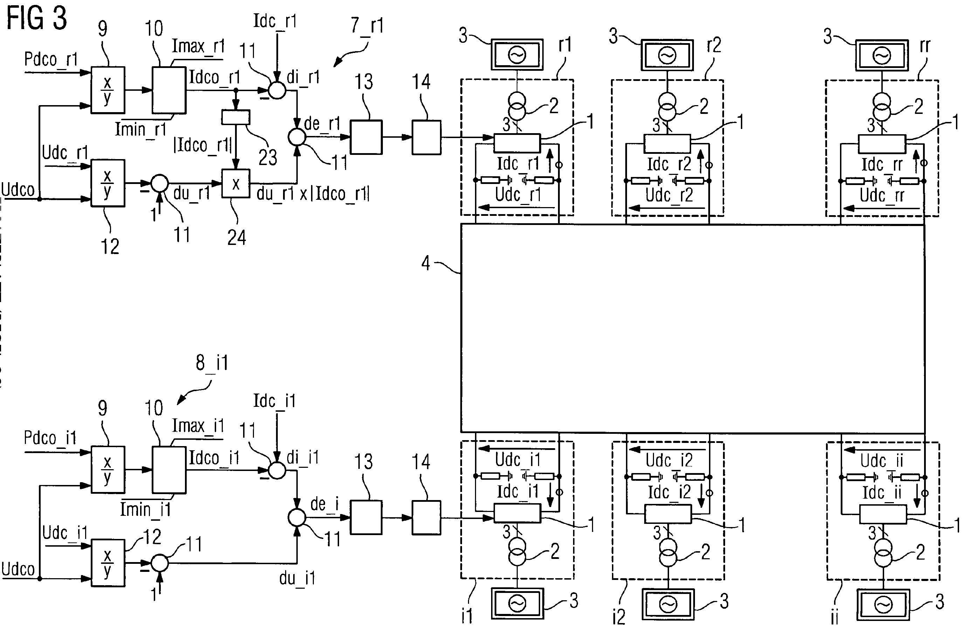

Figur 3 zeigt schematisch ein Ausführungsbeispiel des erfindungsgemäßen Verfahrens für eine HGÜ-Anlage gemäß Figur 1, wobei die Parameter und Größen gemäß Figur 2 für eine Gleichrichterregelung 7_r1 der Gleichrichterstation r_1 bzw. für eine Wechselrichterregelung 8_i1 der Wechselrichterstation i1 eingesetzt werden. Die nicht figürlich dargestellten Gleichrichterregelungen 7_rr sowie die nicht dargestellten Wechselrichterregelung 8_ii sind identisch aufgebaut.

Aus Figur 3 ist erkennbar, dass die Gleichrichterregelung 7_r1 und somit jede Gleichrichterregelung eine ihr zugewiesene Sollgleichleistung Pdco_r1 empfängt. Entsprechendes gilt für die Wechselrichterregelung 8_i1, wobei die jeweils zugeordnete Sollgleichleistung von einer zentralen Leitstelle über nicht gezeigte Kommunikationsverbindungen, beispielsweise eine einfache Funkverbindung an die jeweiligen Stationen übertragen wird. Die Summe aller Sollgleichleistungen ist dabei gleich Null: ∑Pdco_rr+∑Pdco_ii=0. Eine aufwändige, schnelle und sichere Übertragung wie dies bei der klassischen HGÜ der Fall ist, ist im Rahmen der Erfindung überflüssig geworden.

Die empfangene Sollgleichleistung Pdco_r1 bzw. Pdco_i1 wird jeweils einem Divisor 9 zugeführt, an dessen zweiten Eingang die für alle Stationen gleiche Sollgleichspannung Udco anliegt. Die Sollgleichleistung wird beispielsweise ebenfalls von einer Zentralstation übertragen. Der Divisor 9 bildet den Quotienten aus der jeweiligen Sollgleichleistung Pdco und der Sollgleichspannung Udco unter Gewinnung des Sollgleichstromes Idco_r1 bzw. Idco_i1, wobei der jeweilige Sollgleichstrom einem Begrenzer 10 zugeführt wird, welcher den Sollgleichstrom Idco_r1 bzw. Idco_i1 auf einen minimalen Sollgleichstrom Imin_r1, Imin_i1 und einen maximalen Sollgleichstrom Imax_r1, Imax_i1 begrenzt. Der Sollgleichstrom Idco_r1 bzw. Idco_i1 wird anschließend einem Addierer 11 zugeführt, welcher jeweils die Differenz aus dem Sollgleichstrom Idco_r1 bzw. Id-co_i1 und dem Messgleichstrom Idc_r1 bzw. Idco_i1 bildet. Der so gewonnene Differenzgleichstrom di_r1 wird anschließend einem weiteren Addierer 11 zugeführt. Der Wert am zweiten Eingang dieses besagten Addierers 11 wird aus der Messspannung und der Sollspannung hergeleitet. Hierzu wird bei dem Divisor 12 jeweils der Quotient aus der Messgleichspannung Udc_r1 bzw. Udc_i1 und der Sollgleichspannung Udco ermittelt. Die auf diese Weise normierte Messgleichspannung Udc_r1 bzw. Udc_i1 wird anschließend unter Gewinnung der jeweiligen Differenzgleichspannung du_r1 bzw. du_i1 von 1 abgezogen. Bei der Wechselrichterregelung 8_i1 wird die so gewonnene Differenzgleichspannung du_i1 wie oben gesagt dem zweiten Eingang des Addierers 11 zugeführt, der durch Addition seiner Eingänge die Wechselrichterregelabweichung de_i berechnet, die anschließend einem Regler 13 zugeführt wird.

Abweichend von der Wechselrichterregelung 8_i1 wird bei der Gleichrichterregelung 7_r1 die Differenzgleichspannung du_r1 mit dem Betrag des Sollgleichstromes |Idco_r1| multipliziert. Zur Bildung des Betrages |Idco_r1| aus Idco_r1 ist ein Betragsbildner 23 vorgesehen, wobei das Produkt |Idco_r1| * du_r1 mittels eines Multiplikators 24 gebildet wird. Der Differenzgleichstrom di_r1 wird bei der Gleichrichterregelung 7_r1 zu dem besagten Produkt aus du_r1 und |Idco_r1| unter Gewinnung der Regelabweichung de_r des Gleichrichters mittels des Addierers 11 hinzu addiert. Die Regelabweichung des Gleichrichters de_r1 wird anschließend dem Regler 13 und schließlich einem Modul-Management-System 14 zugeführt, welches hier die Steuerung der Leistungshalbleiter des jeweiligen VSCs übernimmt.

Bei den in Figur 3 dargestellten VSCs handelt es sich um so genannte Multilevel VSCs, die wie alle VSCs aus einer Brückenschaltung von Stromventilen bestehen. Bei Multilevel-VSCs ist jedes Stromventil jedoch aus einer Reihenschaltung von bipolaren Submodulen gebildet, die jeweils einen Energiespeicher und parallel zum Energiespeicher eine Schaltung aus Leistungshalbleitern aufweisen, so dass die an dem Energiespeicher abfallende Spannung oder aber eine Nullspannung je nach Ansteuerung der Leistungshalbleiter an dem jeweiligen Submodul abfällt. Die an den Stromventilen insgesamt abfallende Spannung setzt sich additiv aus den Ausgangsspannungen der Submodule zusammen und kann somit stufenweise verändert werden.

Zur Ansteuerung der Leistungshalbleiter der Submodule ist der Ausgang des Reglers 13 an den Eingang des so genannten Modul-Management-Systems gelegt, auf dessen genaue Ausgestaltung hier im Rahmen der Erfindung nicht eingegangen wird, da diese für die Erfindung nicht wesentlich ist. Das Modul-Management-System steuert die Leistungshalbleiter der Submodule dem Ausgang des Reglers 13 entsprechend an. Im Rahmen der Erfindung ist es jedoch auch möglich, dem Regler 13 anstelle eines Modul-Management-Systems einen Pulsweitenmodulator nachzuschalten, der zur Steuerung von zweistufigen oder dreistufigen Voltage Source Converter eingerichtet ist.

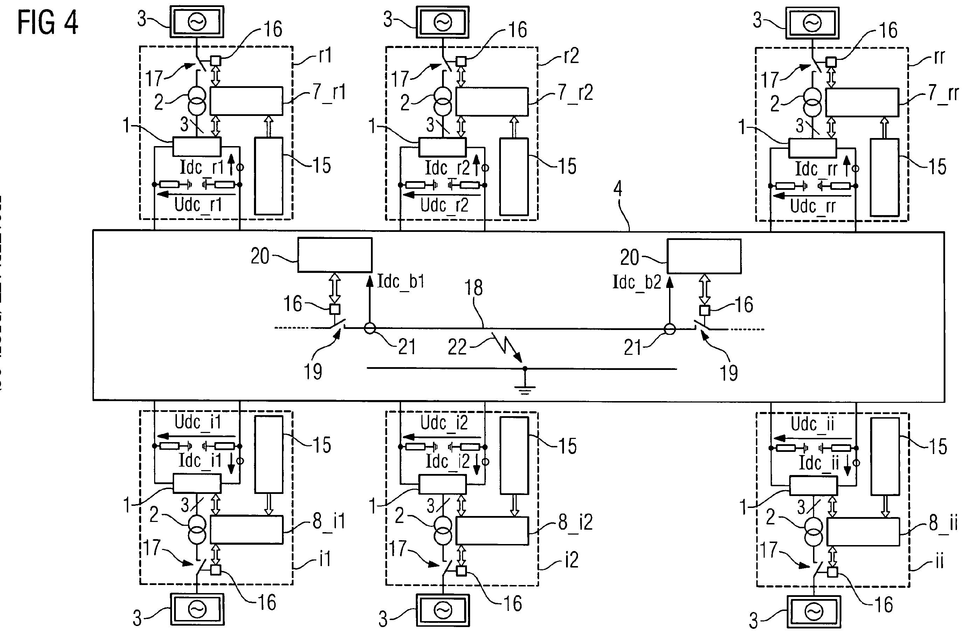

Figur 4 zeigt ebenfalls eine HGÜ-Anlage zur Verdeutlichung eines Ausführungsbeispiels des erfindungsgemäßen Verfahrens. Auch hier sind wieder mehrere Gleichrichterstationen r1, r2...rr und mehrere Wechselrichterstationen i1, i2...ii über ein Gleichspannungsnetz 4 beliebiger Topologie miteinander verbunden. In Erweiterung der Darstellung gemäß den Figuren 3 und 1 umfasst jede Gleichrichterstation rr und jeder Wechselrichterstation ii neben einer Gleichrichterregelung 7_rr bzw. Wechselrichterregelung 8_ii auch eine Schutzeinheit 15, die mit der jeweiligen Gleichrichterregelung 7_rr bzw. Wechselrichterregelung 8_ii verbunden ist. Die jeweilige Gleichrichterregelung 7_rr bzw. Wechselrichterregelung 8_ii ist ferner jeweils mit einem Schutzgerät 16 eines Leistungsschalters 17 verbunden, wobei der Schalter 17 zwischen dem Wechselspannungsnetz 3 sowie dem Transformator 2 angeordnet ist. Im Fehlerfall, beispielsweise bei hohen Kurzschlussströmen, ist es möglich, jeden VSC mittels des wechselspannungsseitigen, mehrpoligen Schalters 17, der beispielsweise ein Leistungsschalter zum Schalten von hohen Kurzschlussströmen ist, vom jeweiligen Wechselstromnetz 3 abzukoppeln. Hierbei erfolgt die Schutzauslösung über die Schutzeinheit 15, welche die jeweilige Regelungseinheit 7 zur Abgabe eines Auslösebefehls an das Schutzgerät 16 veranlasst. In Folge des Auslösebefehls öffnet das Schutzgerät 16 den Leistungsschalter 17.

Um auch das Abschalten oder Abtrennen von Gleichspannungsabschnitten 18 innerhalb der Gleichspannungsverbindung 4 zu ermöglichen, sind in den Gleichspannungsverbindungen Gleichspannungsschalter 19 angeordnet. Zum Auslösen des oder der Gleichspannungsschalter 19 dient eine Gleichspannungsschutzeinheit 20, die mit dem Ausgang eines Gleichspannungsstromsensors 21 verbunden ist, der Gleichstromwerte Idc_b1 bzw. Idc_b2 bereitstellt, welche dem Gleichstrom entsprechen, der über den jeweiligen Schalter 19 fließt. Die Gleichspannungsschutzeinheit 20 ist wiederum mit dem Schutzgerät 16 des Gleichspannungsschalters 19 verbunden.

In Figur 4 ist durch den eingezeichneten Pfeil 22 ein Erdschluss angedeutet, so dass in dem Gleichspannungsabschnitt 18 hohe Kurzschlussströme fließen. Überschreiten die der jeweiligen Gleichspannungsschutzeinheit 20 zugeführten Gleichstromwerte Idc_b1 bzw. Idc__b2 einen zuvor festgelegten Schwellenwert oder ein sonstiges Kriterium, legt die jeweilige Gleichspannungsschutzeinheit 20 einen in der nahen Zukunft liegenden Ausschaltzeitpunkt $t_{aus}$ fest und überträgt den Ausschaltzeitpunkt $t_{aus}$ an die jeweilige Gleichrichterregelung 7_r1, 7_r2, 7_rr bzw. Wechselrichterreglung 8_i1, 8_i2, 8_ii. Diese Regelungen sind mit einem Zeitgeber verbunden, so dass alle Regelungen in etwa gleichzeitig das Erreichen des Ausschaltzeitpunktes feststellen können. Die Schutzeinheit 15 steuert nunmehr die jeweilige Regelungseinheit so an, dass diese über eine Nullstromzeitdauer hinweg den jeweiligen Sollgleichstrom Idco_r1, Idco_r2, Idco_rr bzw. Idco_i1, Id-co_i2 und Idco_ii jeweils auf Null setzt, so dass der jeweilige Messgleichstrom zu Null geregelt wird. Somit wird auch der über die Gleichstromschalter 19 fließende Gleichstrom Idc_b1 bzw. Idc_b2 gleich Null. Der Schalter 19 kann nunmehr stromlos geöffnet werden. Das Erreichen des Ausschaltzeitpunkts wird von der Gleichspannungsschutzeinheit 20 ebenfalls durch Zeitvergleich erkannt. Nach Einhalten einer Sicherheitszeitspanne, die kleiner als eine Nullstromzeitdauer ist, kommt es zum stromlosen Öffnen des Gleichspannungsschalters 19 und somit zum Herausschalten des Gleichspannungsabschnittes 18. Nach Ablauf der Nullstromzeitdauer wird das normale Regelungsverfahren wider in Gang gesetzt. Die jeweiligen Regelungen müssen im Rahmen der Erfindung nicht über die sich geänderte Topologie der Gleichspannungsverbindung 4 informiert werden. Die Regelung fährt selbsttätig stabile Regelungspunkte ohne weitere zusätzliche Einwirkungen an. Auf diese Art und Weise ist ein aufwandsarmes Schalten innerhalb des Gleichspannungsnetzes 4 ermöglicht. Parallelschwingkreise, die gemäß dem Stand der Technik bei Gleichspannungsschaltern zum Einsatz gelangen, sind im Rahmen der Erfindung überflüssig geworden.

## Patentansprüche

1. Verfahren zum Regeln von wenigstens zwei Umrichtern (1), die als Gleichrichter oder Wechselrichter regelbar und über eine Gleichspannungsverbindung (4) miteinander verbunden sind, im Bereich der Energieübertragung und/oder

    - verteilung, bei dem

        - an jedem Umrichter (1) jeweils eine Messgleichspannung (Udc_r1...Udc_rr; Udc_i1...Udc_ii) und jeweils ein Messgleichstrom (Idc_r1...Idc_rr; Idc_i1...Idc_ii) gemessen werden und an eine Gleichrichterregelung (7_rr) zur Regelung des jeweiligen Gleichrichters oder an eine Wechselrichterregelung (8_ii) zur Regelung des jeweils zugeordneten Wechselrichters übertragen werden,
        - wobei jede Gleichrichterregelung (7_rr) und jede Wechselrichterregelung (8_ii) jeweils die Differenz zwischen einer vorgegebenen Sollgleichspannung (Udco) und der jeweils empfangenen Messgleichspannung (Udc_rl...Udc_rr, Udc_i1...Udc_ii) unter Gewinnung einer Differenzgleichspannung (du) und ferner die Differenz zwischen einem Sollgleichstrom (Idco_r1... Idco_rr, Idco_i1...Idco_ii) und dem jeweils empfangenen Messgleichstrom (Idc_r1...Idc_rr, Idc_i1...Idc_ii) unter Gewinnung eines Differenzgleichstromes (di) bilden, wobei der Messgleichstrom, die Messgleichspannung, der Sollgleichstrom und die Sollgleichspannung normiert vorliegen, und

    - jeder Umrichter ein selbstgeführter Umrichter (1) mit abschaltbaren Leistungshalbleitern ist, **dadurch gekennzeichnet, dass**
    - die Gleichrichterregelung (7_rr) den jeweils zugeordneten Umrichter (1) so regelt, dass die Summe aus dem Produkt der Differenzgleichspannung (du) und dem Betrag des am jeweils zugeordneten Gleichrichter vorgesehenen Sollgleichstrom (|Idco_r|) und dem Differenzgleichstrom (di) minimal wird (du*|Idco_r|+di→Min) und
    - die Wechselrichterregelung (8_ii) den jeweils zugeordneten Umrichter (1) so regelt, dass die Summe zwischen der Differenzgleichspannung (du) und dem Differenzgleichstrom (di) minimal wird (du+di→Min).

2. Verfahren nach Anspruch 1,

**dadurch gekennzeichnet, dass**
die Sollgleichspannung (Udco) jeder Gleichrichterregelung und die Sollgleichspannung (Udco) jeder Wechselrichterregelung identisch sind.

3. Verfahren nach Anspruch 1 oder 2,
**dadurch gekennzeichnet, dass**
die Umrichter (1) wenigstens 1 km entfernt voneinander aufgestellt sind.

4. Verfahren nach einem der vorhergehenden Ansprüche,
**dadurch gekennzeichnet, dass**
jede Messgleichspannung (Udc_rr) und die Sollgleichspannung (Udco) auf die Sollgleichspannung (Udco) normiert werden.

5. Verfahren nach einem der vorhergehenden Ansprüche,
**dadurch gekennzeichnet, dass**
zwei Umrichter (1) vorgesehen sind, von denen einer als Gleichrichter und der andere Umrichter (1) als Wechselrichter betrieben wird, wobei sich zwischen dem Gleichrichter und dem Wechselrichter ein Gleichspannungszwischenkreis (4) erstreckt.

6. Verfahren nach einem der Ansprüche 1 bis 4,
**dadurch gekennzeichnet, dass**
wenigstens drei Umrichter (1) vorgesehen sind, zwischen denen sich ein Gleichspannungsnetz (4) erstreckt.

7. Verfahren nach Anspruch 6,
**dadurch gekennzeichnet, dass**
für jede Gleichrichterregelung (7_rr) und für jede Wechselrichterregelung (8_ii) jeweils eine zugeordnete Gleichrichtersollgleichleistung (Pdco_r1...Pdco_rr) beziehungsweise Wechselrichtersollgleichleistung (Pdco_i1...Pdco_ii) festgelegt wird, wobei die Summe aus allen Gleichrichtersollgleichleistungen und allen Wechselrichtersollgleichleistungen ( $\sum$Pco_rr+$\sum$Pdco_ii) gleich null ist.

8. Verfahren nach Anspruch 7,
**dadurch gekennzeichnet, dass**
an jedem Umrichter (1) aus der diesem zugeordneten Sollgleichleistung (Pdco_rr; Pdco_ii) und der allen gemeinen Sollgleichspannung (Udco) der jeweils dem Umrichter (1) zugeordnete Sollgleichstrom (Idco_rr; Idco_ii) bestimmt wird.

9. Verfahren nach einem der vorhergehenden Ansprüche,
**dadurch gekennzeichnet, dass**
die Regelung jedes Gleichrichters und jedes Wechselrichters über den gesamten Arbeitsbereich des Gleichrichters beziehungsweise des Wechselrichters hinweg sowohl auf der Grundlage des jeweils zugeordneten Gleichrichterdifferenzgleichstromes (di_r1...di_rr) als auch auf der Grundlage der Gleichrichterdifferenzgleichspannung (du_r1...du_rr) beziehungsweise auf der Grundlage des jeweils zugeordneten Wechselrichterdifferenzgleichstromes (di_r1...di_rr) als auch auf der Grundlage der zugeordneten Wechselrichterdifferenzgleichspannung (du_i1...du_ii) erfolgt.

10. Verfahren nach einem der vorhergehenden Ansprüche,
**dadurch gekennzeichnet, dass**
an jedem Umrichter (1) jeweils eine Messgleichspannung (Udc_r1...Udc_rr; Udc_i1...Udc_ii) und jeweils ein Messgleichstrom (Idc_r1...Idc_rr; Idc_i1...Idc_ii) gemessen und einer Gleichrichterregelung (7_rr) oder einer Wechselrichterregelung (8_ii) übertragen werden.

11. Verfahren nach Anspruch 10,
**dadurch gekennzeichnet, dass**
eine Anzahl von Umrichtern (1) so geregelt wird, dass ein durch einen in der Gleichspannungsverbindung (4) angeordneten Trennschalter fließender Gleichstrom (Idc_bl;Idc_b2) gleich null wird.

12. Verfahren nach Anspruch 10 oder 11,
**dadurch gekennzeichnet, dass**
wenigstens ein Umrichter (1) den jeweils an ihn erfassten Messgleichstrom (Idc_rr;Idc_ii) zu null regelt und anschließend wenigstens ein in der Gleichspannungsverbindung (4) angeordneter Trennschalter (19) geöffnet wird.

13. Verfahren nach einem der Ansprüche 11 oder 12,
**dadurch gekennzeichnet, dass**
ein Ausschaltzeitpunkt ($t_{aus}$) gesetzt und and die jeweils betroffenen Regelungen übertragen wird, wobei die besagten Regelungen beim Erreichen des Ausschaltzeitpunktes ($t_{aus}$) den ihr zugeordneten Messgleichstrom (Idc_rr;Idc_ii) zu null regelt.

14. Verfahren nach einem der Ansprüche 11 bis 13,
**dadurch gekennzeichnet, dass**
der Messgleichstrom (Idc_rr;Idc_ii) durch jeden betroffenen Umrichter (1) über eine Nullstromzeitdauer hinweg zu null geregelt wird und anschließend das übliche Regelverfahren in Gang gesetzt wird.

15. Verfahren nach einem der Ansprüche 11 bis 14,
**dadurch gekennzeichnet, dass**
durch das Öffnen der Trennschalter (19) einer der Umrichter (1) von der Gleichspannungsverbindung (4) getrennt wird.

16. Verfahren nach einem der Ansprüche 11 bis 15,
**dadurch gekennzeichnet, dass**
durch das Schalten der Trennschalter (19) ein Abschnitt (18) der Gleichspannungsverbindung (4) selektiv von der Gleichspannungsverbindung (4) getrennt wird.

## Claims

1. Method for closed-loop control of at least two converters (1), which can be controlled as rectifiers or inverters and are connected to one another via a DC voltage link (4), in the field of power transmission and/or distribution, in which

   - a measurement DC voltage (Udc_r1...Udc_rr; Udc_i1...Udc_ii) and a measurement direct current (Idc_r1...Idc_rr; Idc_i1...Idc_ii) are in each case measured at each converter (1) and are transmitted to a rectifier regulator (7_rr) for closed-loop control of the respective rectifier, or are transmitted to an inverter regulator (8_ii) for closed-loop control of the respectively associated inverter,
   - wherein each rectifier regulator (7 rr) and each inverter regulator (8_ii) in each case forms the difference between a predetermined nominal DC voltage (Udco) and the respectively received measurement DC voltage (Udc_r1...Udc_rr; Udc_i1...Udc_ii), producing a difference DC voltage (du) and, furthermore, the difference between a nominal direct current (Idco_r1...Idco_rr, Idco_i1...Idco_ii) and the respectively received measurement direct current (Idc_r1...Idc_rr; Idc_i1...Idc_ii), producing a difference direct current (di), where the measurement direct current, the measurement DC voltage, the nominal direct current and the nominal DC voltage are in a normalized form, and
   - each converter is a self-commutated converter (1) having power semiconductors which can be turned off, **characterized in that**
   - the rectifier regulator (7_rr) controls the respectively associated converter (1) such that the sum of the product of the difference DC voltage (du) and the magnitude of the nominal direct current (|Idco_r|), which is provided at the respectively associated rectifier, and the difference direct current (di) is a minimum (du*|Idco_r|+di→Min) and
   - the inverter regulator (8_ii) controls the respectively associated converter (1) such that the sum between the difference DC voltage (du) and the difference direct current (di) is a minimum (du+di→Min).

2. Method according to Claim 1, **characterized in that** the nominal DC voltage (Udco) of each rectifier regulator and the nominal DC voltage (Udco) of each inverter regulator are identical.

3. Method according to Claim 1 or 2, **characterized in that** the converters (1) are installed at a distance of at least 1 km from one another.

4. Method according to one of the preceding claims, **characterized in that** each measurement DC voltage (Udc_rr) and the nominal DC voltage (Udco) are normalized with respect to the nominal DC voltage (Udco).

5. Method according to one of the preceding claims, **characterized in that** two converters (1) are provided, one of which is operated as a rectifier and the other converter (1) is operated as an inverter, wherein a DC voltage intermediate circuit (4) extends between the rectifier and the inverter.

6. Method according to one of Claims 1 to 4, **characterized in that** at least three converters (1) are provided, between which a DC voltage system (4) extends.

7. Method according to Claim 6, **characterized in that** a respectively associated rectifier nominal DC power (Pdco_r1...Pdco_rr) or inverter nominal DC power (Pdco_i1...Pdco_ii) is defined for each rectifier regulator (7_rr) and for each inverter regulator (8_ii), respectively, wherein the sum of all the rectifier nominal DC powers and all the inverter nominal DC powers (∑Pco_rr+∑Pdco_ii) is equal to zero.

8. Method according to Claim 7, **characterized in that** the nominal direct current (Idco_rr; Idco_ii) associated with the respective converter (1) is determined at each converter (1) from the nominal DC power (Pdco_rr; Pdco_ii) associated with it and from the nominal DC voltage (Udco), which is common to all of them.

9. Method according to one of the preceding claims, **characterized in that** the closed-loop control of each rectifier and each inverter is carried out over the entire operating range of the rectifier or of the inverter both on the basis of the respectively associated rectifier difference direct current (di_r1...di_rr) and on the basis of the rectifier difference DC voltage (du_r1...du_rr) and, respectively, on the basis of the respectively associated inverter difference direct current (di_r1...di_rr) and on the basis of the associated inverter difference DC voltage (du_i1...du_ii).

**10.** Method according to one of the preceding claims, **characterized in that**

a respective measurement DC voltage ($Udc\_r1...Udc\_rr$; $Udc\_i1...Udc\_ii$) and a respective measurement direct current ($Idc\_r1...Idc\_rr$; $Idc\_i1...Idc\_ii$) are measured at each converter (1) and are transmitted to a rectifier regulator (7_rr) or to an inverter regulator (8_ii).

**11.** Method according to Claim 10, **characterized in that**

a number of converters (1) are controlled such that a direct current ($Idc\_b1$; $Idc\_b2$) which flows through an isolating switch which is arranged in the DC voltage link (4) is equal to zero.

**12.** Method according to Claim 10 or 11, **characterized in that**

at least one converter (1) controls the respective measurement direct current ($Idc\_rr$; $Idc\_ii$) recorded at it at zero, and at least one isolating switch (19), which is arranged in the DC voltage link (4), is then opened.

**13.** Method according to one of Claims 11 or 12, **characterized in that**

a switching-off time ($t_{off}$) is set and is transmitted to the respectively affected regulators, wherein said regulators control the measurement direct current ($Idc\_rr$; $Idc\_ii$) associated with them to be zero when the switching-off time ($t_{off}$) is reached.

**14.** Method according to one of Claims 11 to 13, **characterized in that**

the measurement direct current ($Idc\_rr$; $Idc\_ii$) is controlled to be zero by each affected converter (1) over a zero-current time period, and the normal closed-loop control method is then started.

**15.** Method according to one of Claims 11 to 14, **characterized in that**

one of the converters (1) is disconnected from the DC voltage link (4) by opening the isolating switches (19).

**16.** Method according to one of Claims 11 to 15, **characterized in that**

a section (18) of the DC voltage link (4) is selectively disconnected from the DC voltage link (4) by switching the isolating switches (19).

**Revendications**

**1.** Procédé de régulation d'au moins deux convertisseurs (1), qui peuvent être réglés en redresseur ou en onduleur et qui sont reliés entre eux par une liaison (4) en tension continue, dans le domaine du transport d'énergie et/ou de la répartition d'énergie, dans lequel

- on mesure, sur chaque convertisseur (1), respectivement, une tension ($Udc\_r1...Udc\_rr$; $Udc\_i1...Udc\_ii$) continue de mesure et, respectivement, un courant ($Idc\_r1...Idc\_rr$; $Idc\_il...Idc\_ii$) continu de mesure et on les transmet à une régulation (7_rr) de redresseur pour la régulation du redresseur respectif ou à une régulation (8_ii) d'onduleur pour la régulation de l'onduleur associé respectivement,
- dans lequel chaque régulation (7_rr) de redresseur et chaque régulation (8_ii) d'onduleur forment respectivement la différence entre une tension (Udco) continue de consigne donnée à l'avance et la tension ($Udc\_r1...Udc\_rr$; $Udc\_i1...Udc\_ii$) continue de mesure reçue respectivement, en obtenant une tension (du) continue de différence et en outre la différence entre un courant ($Idc\_r1...Idco\_rr$, $Idco\_i1...Idco\_ii$) continu de consigne et le courant ($Idc\_r1...Idc\_rr$; $Idc\_i1...Idc\_ii$) continu de mesure reçu respectivement, en obtenant un courant (di) continu de différence, le courant continu de mesure, la tension continue de mesure, le courant continu de consigne et la tension continue de consigne étant normés, et
- chaque convertisseur est un convertisseur (1) automatique à semi-conducteur de puissance pouvant être mis à l'état bloqué,

**caractérisé en ce que**

- la régulation (7_rr) de redresseur règle le convertisseur (1) associé respectivement, de manière à ce que la somme du produit de la tension (du) continue de différence par la valeur absolue du courant ($Idco\_r$|) continu de consigne prévu sur le redresseur associé, respectivement, du courant (du) continu de différence soit minimum ($du*|Idco\_r|+di \rightarrow Min$) et
la régulation (8_ii) d'onduleur régule le convertisseur (1) associé, respectivement, de manière à ce que la somme entre la tension (du) continue de différence et le courant (di) continu de différence soit minimum ($du+di \rightarrow Min$).

**2.** Procédé suivant la revendication 1 **caractérisé en ce que**
la tension (Udco) continue de consigne de chaque régulation de redresseur et la tension (Udco) continue de consigne de chaque régulation d'onduleur sont les mêmes.

**3.** Procédé suivant la revendication 1 ou 2, **caractérisé en ce que**
les convertisseurs (1) sont installés en étant éloignés l'un de l'autre d'au moins 1 km.

**4.** Procédé suivant l'une des revendications précédentes, **caractérisé en ce que**
l'on norme la tension (Udc_rr) continue de mesure et la tension (Udco) continue de consigne sur la tension (Udco) continue de consigne.

**5.** Procédé suivant l'une des revendications précédentes, **caractérisé en ce**
**qu'**il est prévu deux convertisseurs (1), dont l'un fonctionne en redresseur et l'autre en onduleur, un circuit (4) intermédiaire de tension continue s'étendant entre le redresseur et l'onduleur.

**6.** Procédé suivant l'une des revendications 1 à 4, **caractérisé en ce**
**qu'**il est prévu au moins trois convertisseurs (1), entre lesquels s'étend un réseau (4) de tension continue.

**7.** Procédé suivant la revendication 6, **caractérisé en ce que**,
pour chaque régulation (7_rr) de redresseur et pour chaque régulation (8_ii) d'onduleur, on fixe, respectivement, une puissance (Pdco_r1...Pdco_rr) continue de consigne de redresseur et une puissance (Pdco_i1...Pdco_ii) de consigne d'onduleur, la somme de toutes les puissances de consigne de redresseur et de toutes les puissances ($\sum$ Pco_rr+$\sum$ Pdco_ii) continues de consigne d'onduleur étant égales à zéro.

**8.** Procédé suivant la revendication 7, **caractérisé en ce que**
l'on détermine, sur chaque convertisseur, le courant (Idco_rr; Idco_ii) continu de consigne associé, respectivement, au convertisseur (1) à partir de la puissance (Pdco_rr; Pdco_ii) continue de consigne associée et de la tension (Idco) continue de consigne commune à tous.

**9.** Procédé suivant l'une des revendications précédentes, **caractérisé en ce que**
la régulation de chaque redresseur et de chaque onduleur s'effectue sur toute la plage de travail du redresseur ou de l'onduleur, à la fois sur la base du courant (di_r1...di_rr) continu de différence de redresseur associé, respectivement, et sur la base de la tension (du_r1...du_rr) continue de différence de redresseur ou sur la base du courant (di_r1...di_rr) continu de différence d'onduleur associé, respectivement, et sur la base de la tension (du_i1...du_ii) continue de différence d'onduleur associé.

**10.** Procédé suivant l'une des revendications précédentes, **caractérisé en ce que**
l'on mesure sur chaque convertisseur (1) respectivement une tension (Udc_r1...Udc_rr; Udc_i1...Udc_ii) continue de mesure et respectivement un courant (Idc_r1...Idc_rr; Idc_i1...Idc_ii) continu de mesure et on les transmet à une régulation (7_rr) de redresseur ou à une régulation (8_ii) d'onduleur.

**11.** Procédé suivant la revendication 10, **caractérisé en ce que**
l'on régule un certain nombre de convertisseurs (1), de manière à ce qu'un courant (Idc_b1;Idc_bd) continu, passant dans un sectionneur monté dans la liaison (4) de tension continue, soit égal à zéro.

**12.** Procédé suivant la revendication 10 ou 11, **caractérisé en ce qu'**
au moins un convertisseur (1) régule à zéro le courant (Idc_rr;Idc_ii) continu de mesure détecté sur lui, respectivement, et ensuite on ouvre au moins un sectionneur (19) monté dans la liaison (4) de tension continue.

**13.** Procédé suivant l'une des revendications 11 ou 12, **caractérisé en ce que**
l'on fixe un instant ($t_{aus}$) de déconnexion et on le transmet aux régulations concernées, lesdites régulations régulant à zéro, lorsque l'instant ($t_{aus}$) de déconnexion est atteint, le courant (Idc_rr;Idc_ii) continu de mesure qui lui est associé.

**14.** Procédé suivant l'une des revendications 11 à 13, **caractérisé en ce que**
l'on régule à zéro le courant (Idc_rr;Idc_ii) continu de mesure par chaque convertisseur (1) concerné pendant une durée de courant zéro et on effectue ensuite le procédé de régulation habituel.

**15.** Procédé suivant l'une des revendications 11 à 14, **caractérisé en ce que**,
par l'ouverture du sectionneur (19), on sépare l'un des convertisseurs (1) de la liaison (4) de tension continue.

**16.** Procédé suivant l'une des revendications 11 à 15, **caractérisé en ce que**,
par la fermeture du sectionneur (19), on sépare un tronçon (18) de la liaison (4) de tension continue sélectivement de la liaison (4) de tension continue.

FIG 1

## FIG 2

$de\_r = du\_r \times |Idco\_r| + di\_r = 0$

$Pdco\_r = -Pdco$

$Pdco = Udco \times Idco$

$Pdco\_i = Pdco$

$-de\_i$

X_r

W_r

$Udco\_r = Udco$

$Udc\_r$

$du\_r = 1 - \dfrac{Udc\_r}{Udco\_r} < 0$

$du\_i = 1 - \dfrac{Udc\_i}{Udco\_i} > 0$

$Udc\_i$

$Udco\_i = Udco$

W_i

X_i

$de\_i = du\_i + di\_i = 0$

$di\_r = -Idco\_r + Idc\_r > 0$

$di\_i = -Idco\_i + Idc\_i < 0$

Idc_r

Idc_i

$Idco\_r = -Idco$

$Idco\_i = Idco$

Gleichspannung [p.u.]

-1.3 -1.2 -1.1  -1  -0.9 -0.8 -0.7 -0.6 -0.5 -0.4 -0.3 -0.2 -0.1  0  0.1 0.2 0.3 0.4 0.5 0.6 0.7 0.8 0.9  1  1.1 1.2 1.3

Gleichstrom [p.u.]

EP 2 289 145 B1

FIG 3

EP 2 289 145 B1

FIG 4

EP 2 289 145 B1

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007033620 A1
- DE 19544777 C1

- WO 20070336619 A1